# EUROPÄISCHE PATENTSCHRIFT

(11) **EP 0 632 118 B1**
(45) Veröffentlichungstag und Bekanntmachung des Hinweises auf die Patenterteilung: **25.11.1998**
(21) Anmeldenummer: 94108525.0
(22) Anmeldetag: 03.06.1994
(51) Int. Cl.: C10B 53/00

(54) **Verfahren und Vorrichtung zur Behandlung von im wesentlichen aus Kunststoff oder Gummi bestehendem Gut**
Process and apparatus for treating materials essentially consisting of plastic or rubber
Procédé et dispositif de traitement de matériaux constitués essentiellement de plastique ou de caoutchouc

(30) Priorität: 29.06.1993 DE 4321641; 27.05.1994 DE 4418562
(43) Veröffentlichungstag der Anmeldung: 04.01.1995
(73) Patentinhaber: ALD Vacuum Technologies GmbH, 63526 Erlensee (DE)
(72) Erfinder: Hugo, Franz, D-63743 Aschaffenburg (DE); Teuschel, Helmut, D-63069 Offenbach (DE); Wanetzky, Erwin, D-63538 Grosskrotzenburg (DE)

(56) Entgegenhaltungen:
- EP-A- 0 369 351
- EP-A- 0 505 278
- WO-A-91/05030
- DE-A- 2 804 616
- DE-A- 4 136 990
- GB-A- 2 132 220
- US-A- 4 740 270

## Beschreibung

Die Erfindung betrifft ein Verfahren zum Aufarbeiten von aus organischen Stoffen in Form von Gummi, Kunststoff und/oder Lacken bestehendem oder mit organischen Stoffen in Form von Gummi, Kunststoffen und Lacken versehenem Gut bei erhöhter Temperatur.

Im privaten wie im industriellen Bereich fallen massenhaft Abfälle aus Gummi, Kunststoffen und Lacken oder mit diesen Stoffen versehene Bauteile an, die ganz oder teilweise als Wertstoffe zu bezeichnen sind und aufgearbeitet werden sollen. Die Aufarbeitung wird aus ökologischen Gründen zunehmend wichtiger. Die bisher bekannten Verfahren sind die Verbrennung und die Verschwelung. Beide Verfahren sind nicht problemlos, da zum Teil Chlor- und Schwefelverbindungen freigesetzt werden. Zum Teil enthalten die Gummiabfälle Metalleinlagen mit korrosionsschützenden (z.B. Zn) Auflagen, die oxidiert und als Flugstaub freigesetzt werden. Bei den Verbrennungsvorgängen werden sehr große Luftmengen durchgesetzt, die in großen Gas- und Staubfiltern gereinigt werden müssen.

Es ist bekannt, überflüssige Altreifen, d.h. solche, die nicht mehr runderneuert werden können, in Zementfabriken als Heizmaterial einzusetzen. Hierbei gehen jedoch fast alle Wertstoffe verloren.

Es ist durch den Aufsatz von Theerkorn u.a. "Sauberer Wirbel", veröffentlicht in "Maschinenmarkt", Würzburg 98 (1992), Seiten 30 bis 35, weiterhin bekannt, Metallteile im reduktiven Fluidbett-Verfahren in Aluminiumoxidpulver in Gegenwart von Stickstoff und Wasserstoff bei Temperaturen zwischen 350 und 1000 °C, vorzugsweise aber oberhalb von 450 °C, zu reinigen. Hierbei werden jedoch außer den Metallteilen durch Cracken nur gasförmige Stoffe erhalten, die gereinigt und verbrannt werden. Es wird sogar vorgeschlagen, die Abgase durch ein zweites Fluidbett höherer Temperatur zu leiten, um dem imissionsschutzgesetz zu genügen. Für die Vermeidung von Dioxinen und Furanen werden sogar Temperaturen von 950 °C angegeben. Mitgerissene Aluminiumoxidpulverteilchen müssen in einem Zyklonabscheider aufgefangen werden. Eine Entfettung erfolgt bei Temperaturen zwischen 350 und 460 °C, bei starker Verunreinigung zwischen 450 und 550 °C und Prozeßdauern bis zu 60 Minuten. Eine derartige Temperaturbelastung halten viele Werkstücke, insbesondere solche aus Aluminiumlegierungen nicht aus. Dünnwandige Werkstücke neigen zum Verziehen.

Es ist weiterhin bekannt, die Entfettung und Entlackung von Bauteilen in einem reaktiven Niederdruckplasma durchzuführen, das durch Mikrowellen angeregt wird. Die Vorrichtung ist jedoch aufwendig, und das Verfahren stellt eine hohe Temperaturbelastung für die Bauteile dar.

Es ist weiterhin bekannt, Metallteile von Elastomeren und anderen Kunststoffen durch Kryogen-Technik zu entschichten, indem man die Gegenstände in flüssigem Stickstoff auf -196 °C abkühlt und hierbei die Kunststoffe versprödet. Die abgefallenen oder abgeschlagenen Kunststoffe müssen jedoch in weiteren Prozessen aufgearbeitet werden.

An Recyclingverfahren für zahlreiche anfallenden Wertstoffe ist bislang nicht gedacht worden. So werden beispielsweise Kardangelenke an Kraftfahrzeugen mit gummi-elastischen Bälgen vor Schmutz und Staub geschützt. Diese Bälge haben im Betrieb eine Doppelfunktion zu erfüllen. Sie stellen erstens ein mit Schmierfett versehenes Reservoir für das Gelenk dar und verhindern zweitens das Eindringen von Wasser und aggressivem Schmutz.

Nach einer begrenzten Betriebsdauer durch Alterung oder auch durch Beschädigung müssen diese Bälge erneuert werden. Dies geschieht praktisch immer beim Austausch des Kardangelenks. Die verschlissenen Bälge werden als Problemmüll bezeichnet. Diese Bälge fallen gleichfalls bei der Autoverwertung mit anderen Bauteilen wie zum Beispiel Simmerringen, Hutmanschetten, O-Ringen oder weiteren Dichtungen an.

Eine Wiederaufbereitung oder auch nur eine Entsorgung wäre möglich, wenn der Kunststoff oder Gummi von den Schmiermitteln getrennt wird. Diese Trennung ist bislang meist durch Waschvorgänge ermöglicht worden. Ein weiteres Verfahren zur Entfettung und Entölung von Kunststoff oder Gummi enthaltenden Bauteilen ist das thermische Verdampfen der Fette im Vakuum. Hierzu ist im Stand der Technik bereits ein Verfahren bekannt (DE P 41 36 990.4). Diese Schrift beschreibt ein Verfahren zur Entfettung und Reinigung von mit fett- und/oder ölhaltigen Stoffen behaftetem Gut und zeichnet sich dadurch aus, daß das zu reinigende Gut unter Vakuumbedingungen in einer Prozeßkammer derart erwärmt wird, daß die Fette und/oder Öle in Abhängigkeit von ihrem Aggregatzustand vom Gut abtrennbar sind.

Für die Weiterverwertung der so entfetteten Gummiteile müssen diese kleingeschnitten und gemahlen werden. Der Mahlvorgang ist weitaus schwieriger als die Entfettung, kann aber durch Unterkühlung, zum Beispiel mit flüssigem Stickstoff durchgeführt werden.

Diese bekannten Verfahren und Vorrichtungen haben den Nachteil, daß zum Beispiel auch nach der Verbrennung noch große Mengen an festen und gasförmigen Abfallstoffen vorhanden sind, die entweder separat entsorgt oder zum Teil auch durch Verbrennung an die Atmosphäre abgegeben werden. Die Abgase aus der Verbrennung enthalten große Mengen Metalloxide (z.B. Zink-, Cadmium-, Vanadium-, Arsen-Oxid u.a.), die zum Teil sehr giftig sind.

Aufgabe der vorliegenden Erfindung ist es nun, ein Verfahren und eine Vorrichtung anzugeben, durch die die bei der Aufarbeitung von Gut aus oder mit Gummi, Kunststoffen oder Lacken entstehende Gasmenge minimiert wird und sowohl die Gase als auch die gegebenenfalls im Gut vorhandenen metallischen Feststoffe auf einfache Weise einer ökologisch und ökonomisch vertretbaren Weiterverarbeitung oder Entsorgung zugeführt werden können.

Diese Aufgabe wird bei dem im Anspruch 1 angegebenen Verfahren erfindungsgemäß dadurch gelöst.

Es ist dabei im Zuge weiterer Ausgestaltungen der Erfindung besonders vorteilhaft, wenn man
a) bei in dem Gut enthaltenen metallischen Komponenten die aus den organischen Stoffen gebildeten Rückstände von den metallischen Komponenten ablöst, sammelt, gegebenenfalls zerkleinert und gleichfalls einer Wiederverwertung oder Entsorgung zuführt,
   und/oder, wenn man
b) beim Vorhandensein verdampfbarer metallischer Komponenten diese verdampft, gleichfalls kondensiert und einer Wiederverwertung oder Entsorgung zuführt, insbesondere dann, wenn man zur Verzögerung der Verdampfung der verdampfbaren metallischen Komponenten den Druck anfänglich unterhalb des Atmosphärendrucks, jedoch oberhalb des späteren Behandlungsdrucks, einstellt,
   und/oder, wenn man
c) verfettetes und/oder veröltes Gut in einem Vorreinigungsschritt durch Erwärmen bei unteratmosphärischem Druck entfettet und/oder entölt und die Fette und/oder Öle auffängt und einer Wiederverwertung oder Entsorgung zuführt, insbesondere dann, wenn man die Vorreinigung bei einer niedrigeren Temperatur als die der Aufarbeitung durchführt,
   und/oder, wenn man
d) die Aufarbeitung bei einem Druck von maximal 40 mbar, vorzugsweise von maximal 10 mbar, durchführt,
   und/oder, wenn man
e) beim Aufarbeiten von Gut mit metallischen Komponenten die von den Rückständen befreiten metallischen Komponenten einer Wiederverwertung zuführt,
   und/oder, wenn man
f) beim Aufheizen des Gutes den Druck anfänglich unter den Atmosphärendruck, jedoch über den späteren Behandlungsdruck, einstellt und die Kondensationswärme der zuerst verdampften Komponenten zum Aufheizen kälterer Zonen innerhalb der gleichen Chargen verwendet.

Das erfindungsgemäße Verfahren eignet sich insbesondere für die Aufarbeitung von folgendem Gut, wobei Gummi, Kunststoffe und Lacke verspröden und abfallen oder abgeklopft werden und die bei der Versprödung flüchtigen Komponenten überdestillieren:
- elektrischen Leitungen mit einer Ummantelung aus Kunststoff und/oder Gummi, wobei das Leitungsmaterial (z.B. Kupfer) zurückbleibt,
- durch Gummi verbundenen metallischen Massivteilen, insbesondere Schwingmetallen, wobei die Massivteile (z.B. Stahl) zurückbleiben,
- Kunststoffbehältern mit Farbpigmenten, insbesondere aus der Gruppe Joghurt-Becher, Ölflaschen und Tüten, wobei die Pigmente zurückbleiben,
- Kraftfahrzeug-Lenkrädern mit einem Metallkern und einem Überzug aus organischem Material, wobei der Metallkern zurückbleibt,
- Airbag-Deckeln aus einem Metallkunststoffverbund, wobei das Metall zurückbleibt,
- mit Lack überzogenen Werkstückträgern aus einer Lackierstraße, wobei die Werkstückträger zurückbleiben,
- fehllackierten Metallteilen und kunststoffbeschichteten Werkstückträgern für galvanische Bäder, die zurückbleiben,
- Autoreifen mit Drahteinlagen, die einen Überzug aus Cadmium und/oder Zink aufweisen, wobei die Drahteinlagen zurückbleiben und leichtsiedende Metalle (z.B. Schutzüberzüge der Drahteinlagen) kondensiert werden,
- Gummipolstern von Ketten von Gleiskettenfahrzeugen, wobei der metallische Träger der Polster zurückbleibt,
- mit Kunststoff beschichteten Werkzeugen, insbesondere Extrusionswerkzeugen, wobei die Werkzeuge wiedergewonnen werden,
- Dichtungselementen, insbesondere Faltenbälgen, Dichtungsringen, Simmerringen, O-Ringen und Hutmanschetten.

Abdestillierte Schmierstoffe können anschließend wieder aufbereitet und einer neuen Verwendung zugeführt werden. Verbleiben die so gereinigten Bauteile nach der Entfettung in der Vakuumprozeßkammer und wird die Prozeßtemperatur weiter gesteigert, so verlieren diese ursprünglich flexiblen Kunststoff- oder Gummiteile ihre Elastizität. Die organischen Verbindungen werden zerstört und es bleibt bei Gummi ein Kohlenstoffgerüst übrig. Die leicht verdampfbaren Metalle (z.B. Zn, Cd) werden im Kondensator metallisch abgeschieden. Das metallische Kondensat setzt sich, aufgrund der höheren Dichte gegenüber den Ölen, am Boden des Kondensators ab. Dieses Kohlenstoffgerüst - frei von verdampfbaren Metallen - kann anschließend problemlos zerkleinert oder zu Pulver gemahlen werden. Die bei dem Versprödungsprozeß anfallenden S-, Cl-, F- und N-Verbindungen können nach bekannten Verfahren neutralisiert und niedergeschlagen werden.

Gegenüber der herkömmlichen Verbrennung sind bei dem erfindungsgemäßen Verfahren vorteilhafterweise nur wesentlich geringere Abgasmengen zu behandeln. Gleichzeitig ist dieser Prozeß als geschlossener Prozeß durchführbar, so daß keine Gase unbeabsichtigt in die Umgebungsluft gelangen können. Im Gegenteil, die in dem Gasbehälter gesammelten Gase können durch einen Gasanalysator bestimmt werden und einer gezielten Weiterbenutzung oder Entsorgung zugeführt werden. So ist es möglich, die Druckseite der Vakuumpumpe mit einem Brenner oder einer katalytischen Vorrichtung zu verbinden.

Verwertbare Gase können in transportfähige Flaschen abgefüllt werden.

Die versprödeten Gummiteile können, zum Beispiel zu Pulver gemahlen, überall dort eingesetzt werden, wo Kohlenstaub oder -mehl verwendet und zu Kohle- oder Graphit-Halbzeugen, evtl. wieder zu Gummiartikeln verarbeitet werden. Alle nichtmetallischen Destillationsprodukte können zu neuen Schmiermitteln verarbeitet werden.

In einem Ausführungsbeispiel wurden verölte Gummiteile in einer Vakuum-Entfettungsanlage zunächst bis auf 200 °C erwärmt und anschließend auf 300 °C aufgeheizt, um diese zu verspröden. Die Prozeßdauer bei Erwärmung von 20 °C Raumtemperatur auf 300 °C und anschließendem Halten bei 300 °C betrug ca. 3 Stunden. Danach wurde die Anlage abgeschaltet und mit natürlicher Geschwindigkeit abgekühlt. Nach diesem Verfahren und mit dieser Vorrichtung können zum Beispiel Kunststoff- und Gummiartikel jeglicher Art versprödet werden.

Die Erfindung betrifft auch eine Vorrichtung zur Durchführung des Verfahrens. Sie ist im Anspruch 14 angegeben.

Diese Vorrichtung kann im Zuge weiterer Ausgestaltungen der Erfindung durch folgende Merkmale gekennzeichnet sein:
- der Vakuumpumpe ist ein Gasneutralisator nachgeschaltet,
- im Rohrleitungssystem ist ein Gassammelbehälter angeordnet,
- die Vakuumprozeßkammer ist als Durchlaufanlage mit mindestens einem Schleusenventil ausgebildet,
- der Vakuumprozeßkammer ist eine Abkühlkammer nachgeschaltet.
- zwischen der Vakuumprozeßkammer und der Abkühlkammer ist eine Schleuse angeordnet,
- in einer der Vakuumprozeßkammer nachgeschalteten Rohrleitung ist ein Regelventil angeordnet,
- der Kondensatabscheider ist als Öldampf-Kondensator ausgebildet,
- der Kondensatabscheider ist als Metalldampf-Kondensator ausgebildet,
- zwischen der Vakuumpumpe und einer der Vakuumpumpe nachgeschalteten Ableitung ist eine durch Ventile regelbare Ringleitung angeordnet, in der sich der Gasneutralisator und/oder der Gastrockner befindet bzw. befinden,
- dem Gassammelbehälter ist eine Abfüllvorrichtung für das Befüllen von Transportflaschen nachgeschaltet,
- der Vakuumpumpe ist ein Brenner für die Verbrennung der Abgase nachgeschaltet, und/oder
- der Vakuumpumpe ist eine katalytische Vorrichtung, insbesondere mit einem Niedertemperatur-Katalysator nachgeschaltet.

Weitere Ausführungsmöglichkeiten und Merkmale sind in den Unteransprüchen näher beschrieben und gekennzeichnet.

Die Erfindung läßt die verschiedensten Ausführungsmöglichkeiten zu; eine davon ist in den anhängenden Zeichnungen näher dargestellt und zwar zeigen:

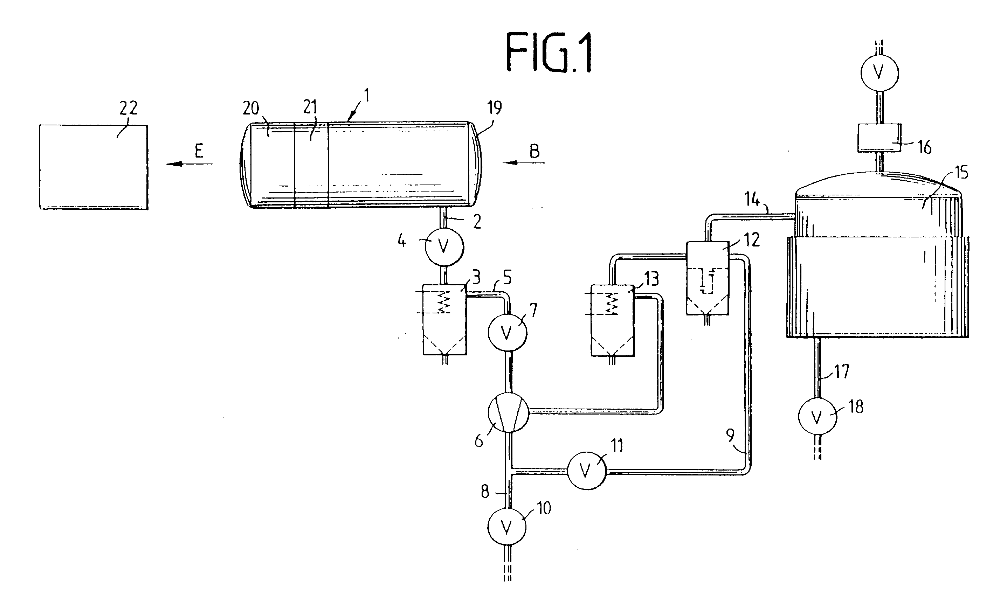

- Figur 1: eine schematische Darstellung der Prozeßkomponenten für ein Gummi-Versprödungsverfahren,
- Figur 2: den Druckverlauf während eines Versprödungsverfahrens,
- Figur 3: den Temperaturverlauf während eines Versprödungsverfahrens und
- Figur 4: den Druckverlauf während eines Versprödungsverfahrens mit gleichzeitiger Metalldampf-Kondensation.

Eine elektrisch beheizte oder gas-/ölbefeuerte Prozeßkammer 1 ist über eine Leitung 2 mit einem Kondensatabscheider 3 verbunden. In der Leitung 2 ist ein Absperrventil 4 vorgesehen. Der Abscheider 3 wiederum ist über eine Saugleitung 5 mit einer Vakuumpumpe 6 in Verbindung, wobei in der Saugieitung 5 ein Ventil 7 angeordnet ist. Die elektrische Beheizung der Prozeßkammer und/oder des Gutes kann kapazitiv, induktiv, durch Mikrowelle mit direkter oder indirekter Ankopplung oder durch Heizwiderstände erfolgen.

Auf der Ausgangsseite der Vakuumpumpe 6 befinden sich eine Ableitung 8 und eine Ringleitung 9. die beide durch die Ventile 10 und 11 regelbar sind. In der Ringleitung 9 sind weiterhin ein Gasneutralisator 12 sowie ein Gastrockner 13 vorgesehen. Am Neutralisator 12 ist weiterhin eine Leitung 14 angeordnet, die den Neutralisator 12 mit einem Gasbehälter 15 verbindet.

Am Gasbehälter 15 befinden sich ein Gasanalysator 16 sowie eine Ableitung 17, die mittels des Ventils 18 verschließbar ist und beispielsweise zum Verfüllen des Gases in Transportflaschen einsetzbar ist.

Die Prozeßkammer 1 ist als Schleusenkammer ausgeführt, so daß das zu behandelnde Gut durch eine Beladetür 19 auf der einen Kammerseite in die Kammer 1 eingebracht wird und nach Ende des Behandlungsverfahrens auf der gegenüberliegenden Kammerseite durch eine Entladetür 20 aus der Kammer 1 herausbringbar ist. Die Entladetür 20 ist von dem Behandlungsraum der Kammer 1 durch eine Schleuse 21 abtrennbar. Alternativ kann die Vakuumprozeßkammer 1 auch chargenweise betrieben werden, wenn sie nur eine Beladetür 19 aufweist.

An die Prozeßkammer 1 schließt sich in Entladerichtung E ein Silo oder eine Abkühleinrichtung 22 als Zwischenlager für eine nicht dargestellte Mahlvorrichtung an, in der das versprödete Gut anschließend mechanisch zerkleinert und gegebenenfalls verdichtet wird.

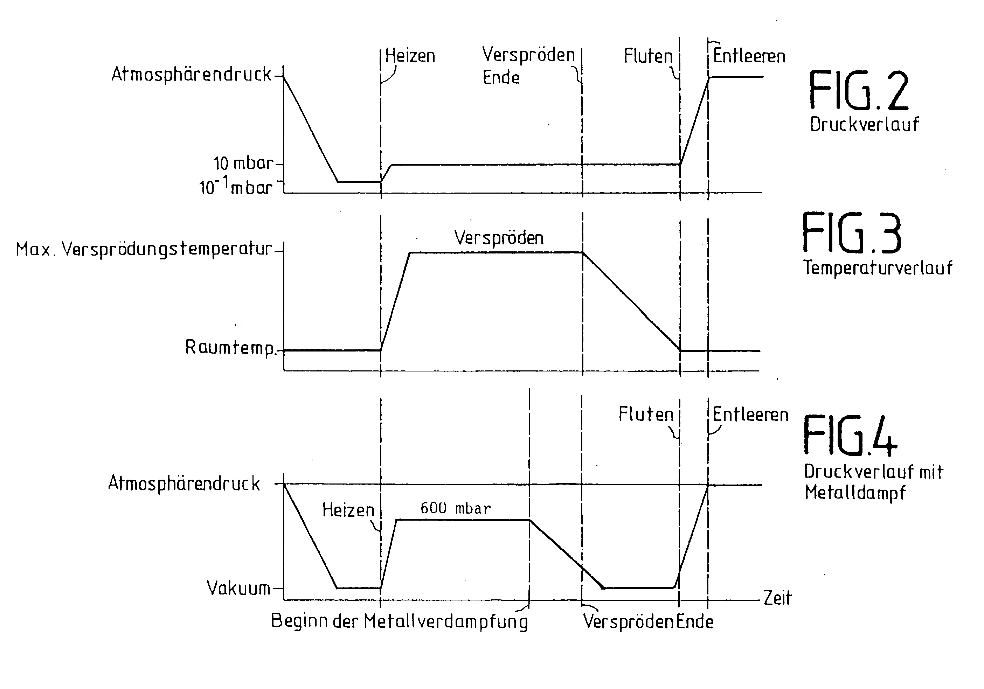

Die nachfolgenden Figuren 2, 3 und 4 zeigen beispielhaft den Druck- bzw. Temperaturverlauf als Funktion der Zeit innerhalb der Prozeßkammer 1 während eines Versprödungsverfahrens.

Nach dem Einbringen des anfangs flexiblen, weichen Guts in die Kammer wird zunächst vom Atmosphärendruck ausgehend (Figur 2) ein Vakuum mit beispielsweise 10⁻¹ mbar eingestellt und für kurze Zeit konstant gehalten. Nun beginnt der Heizvorgang, so daß sich der Kammerdruck geringfügig erhöht, auf beispielsweise 10 mbar. Dieser Druck bleibt nahezu konstant - vorausgesetzt die Prozeßkammer wird kontinuierlich evakuiert - über das Ende des Versprödungsverfahrens hinaus bis zum Beginn des Flutens der Kammer. Danach steigt der Kammerdruck wieder bis auf Atmosphärendruck und die Kammer kann geöffnet und entleert werden.

Der Temperaturverlauf (Figur 3) bleibt bis zum Beginn des Heizvorgangs konstant auf Raumtemperatur. Nun wird zügig auf Versprödungstemperatur aufgeheizt; diese beginnt üblicherweise bei 250 °C für zu behandelnde Werkstücke aus Gummi und reicht bis über 400 °C. Bestehen dagegen die zu versprödenden Werkstücke nicht ausschließlich aus Gummi, Kunststoff o.ä., sondern sind in den Werkstücken noch metallische Einlagen vorhanden, die einen Überzug aus leicht verdampfbaren Metallen wie Cadmium und/oder Zink besitzen, wie beispielsweise bei Stahlgürtelreifen so muß die Prozeßtemperatur oberhalb der Verdampfungstemperatur des betreffenden Metalls liegen. Dieses beträgt beispielsweise für Cadmium mindestens 320 °C und für Zink mindestens 400 °C, jeweils bei einem Vakuum kleiner als 10⁻¹ mbar.

Nach Beendigung des Versprödungsvorgangs wird die Charge ausgeschleust oder die Kammertemperatur wieder bis auf Raumtemperatur abgekühlt, und bei dieser Temperatur wird die Kammer geflutet und entleert.

Im Vergleich zu dem in Figur 2 gezeigten Druckverlauf nimmt dieser einen anderen Verlauf an (Figur 4), wenn während des Versprödens auch noch Metall aus dem Gut verdampft wird, wie bereits beim Temperaturverlauf in Figur 3 erwähnt. Hierbei verändert sich der Druck (während des eigentlichen Versprödens) dadurch, daß die Prozeßkammer mir Heizbeginn verschlossen und nicht weiter abgepumpt wird. Somit steigt der Kammerdruck auf einen Wert, der unterhalb des Atmosphärendrucks, aber oberhalb des eigentlichen Behandlungsdrucks, beispielsweise bei etwa 600 mbar, liegen kann. Mit Beginn der Metallverdampfung wird die Saugleitung zur Kammer wieder geöffnet, die Kammer verstärkt evakuiert und der Druck bis über das Ende des Versprödens hinaus auf seinen Minimalwert gesenkt. Nachdem die Kammer komplett evakuiert ist, wird der Vakuumdruck noch über einen kurzen Zeitraum auf Minimalwert gehalten und anschließend wird die Kammer geflutet und entleert.

### BEZUGSZEICHENLISTE

- 1: Prozeßkammer
- 2: Kondensatleitung
- 3: Kondensatabscheider
- 4: Ventil
- 5: Saugleitung
- 6: Vakuumpumpe
- 7: Ventil
- 8: Ableitung
- 9: Ringleitung
- 10: Ventil
- 11: Ventil
- 12: Gas-Neutralisator
- 13: Gas-Trockner
- 14: Leitung
- 15: Gasbehälter
- 16: Gas-Analysator
- 17: Ableitung
- 18: Ventil
- 19: Beladetür
- 20: Entladetür
- 21: Schleuse
- 22: Silo

- B: Belade-Richtung
- E: Entlade-Richtung

## Patentansprüche

1. Verfahren zum Ausarbeiten von aus organischen Stoffen in Form von Gummi, Kunststoffen und/oder Lacken bestehendem oder mit organischen Stoffen in Form von Gummi, Kunststoffen und Lacken versehenem Gut bei erhöhter Temperatur, wobei das Gut bei unteratmosphärischem Druck in einer nichtreaktiven Atmosphäre auf eine Temperatur von mindestens 200°C aufgeheizt, die dabei gebildeten Gase und Dämpfe kondensiert und das Kondensat aufgefangen und einer Wiederverwertung oder Entsorgung zugeführt wird, **dadurch gekennzeichnet,** daß bei im Gut enthaltenen metallischen Komponenten die aus den organischen Stoffen gebildeten Rückstände von den metallischen Komponenten abgelöst, gesammelt, zerkleinert und einer Wiederverwertung oder Entsorgung zugeführt werden.

2. Verfahren nach Anspruch 1, **dadurch gekennzeichnet,** daß beim Vorhandensein verdampfbarer metallischer Komponenten diese verdampft, kondensiert und einer Wiederverwertung oder Entsorgung zugeführt werden.

3. Verfahren nach Anspruch 1, **dadurch gekennzeichnet,** daß verfettetes und/oder veröltes Gut in einem Vorreinigungsschritt durch Erwärmen bei unteratmosphärischem Druck entfettet und/oder entölt und die Fette und/oder Öle aufgefangen und einer Wiederverwertung oder Entsorgung zugeführt werden.

4. Verfahren nach Anspruch 3, **dadurch gekennzeichnet,** daß die Vorreinigung bei einer niedrigeren Temperatur als die Aufarbeitung durchgeführt wird.

5. Verfahren nach Anspruch 2, **dadurch gekennzeichnet,** daß zur Verzögerung der Verdampfung der verdampfbaren metallischen Komponenten beim Aufheizen des Gutes der Druck anfänglich unter den Atmosphärendruck, jedoch über den späteren Behandlungsdruck eingestellt und die Kondensationswärme der zuerst verdampften Komponenten zum Aufheizen kälterer Zonen innerhalb der gleichen Charge verwendet wird.

6. Verfahren nach Anspruch 1, **dadurch gekennzeichnet,** daß beim Aufarbeiten von Gut mit metallischen Komponenten die von den Rückständen befreiten metallischen Komponenten einer Wiederverwertung zugeführt werden.

7. Verfahren nach Anspruch 1, **dadurch gekennzeichnet,** daß beim Aufarbeiten von elektrischen Leitungen mit einer Ummantelung aus Kunststoff und/oder Gummi die Leitungen einer Temperatur von mindestens 200°C ausgesetzt, die aus der Ummantelung gebildeten Rückstände mechanisch entfernt und die metallischen Komponente der Leitungen einem Wiederverwertungsprozeß zugeführt werden.

8. Verfahren nach den Ansprüchen 1 und 6, **dadurch gekennzeichnet,** daß durch Gummi verbundene metallische Massivteile, insbesondere Schwingmetalle, entsprechend aufgearbeitet und die Massivteile einer Wiederverwertung zugeführt werden.

9. Verfahren nach Anspruch 1, **dadurch gekennzeichnet,** daß Kunststoffbehälter mit Farbpigmenten einer Temperatur von mindestens 200°C, vorzugsweise von mindestens 250°C, ausgesetzt, die Kunststoffkomponente verdampft und kondensiert und die Farbpigmente gesammelt werden.

10. Verfahren nach Anspruch 1, **dadurch gekennzeichnet,** daß Kraftfahrzeug-Lenkräder mit einem Metallkern und einem Überzug aus organischem Material einer Temperatur von mindestens 250°C ausgesetzt, die aus dem organischen Material gebildeten Rückstände von dem Metallkern entfernt und der Metallkern einer Wiederverwertung zugeführt werden.

11. Verfahren nach Anspruch 1, **dadurch gekennzeichnet,** daß mit Lack überzogene Werkstückträger aus einer Lackierstraße einer Temperatur von mindestens 200°C ausgesetzt und die aus dem Lack gebildeten Rückstände von dem Werkstückträger entfernt werden.

12. Verfahren nach Anspruch 1, **dadurch gekennzeichnet,** daß fehllackierte Metallteile einer Temperatur von mindestens 200°C ausgesetzt und die aus dem Lack gebildeten Rückstände von den Metallteilen entfernt und die Metallteile einer Wiederverwertung zugeführt werden.

13. Verfahren nach den Ansprüchen 1 und 2, **dadurch gekennzeichnet,** daß Autoreifen mit Drahteinlagen, die einen Überzug aus Cadmium und/oder Zink aufweisen, zunächst versprödet, danach die Chargentemperatur auf Werte erhöht werden, bei denen unter einem vorgegebenen Vakuum das Cadmium und/oder Zink verdampft, die versprödeten Gummirückstände entfernt und aufgefangen und die Dämpfe aus Cadmium und/oder Zink kondensiert und einer Wiederverwertung zugeführt werden.

14. Vorrichtung zur Durchführung des Verfahrens nach einem oder mehreren der vorhergehenden Ansprüche, **gekennzeichnet durch** eine beheizbare Vakuumprozeßkammer (1), der durch Rohrleitungen (2,5) eines Rohrleitungssystems (2,5,9,14) mit Ventilen (4,7) mindestens ein Kondensatabscheider (3), eine Vakuumpumpe (6) und ein Gastrockner (13) nachgeschaltet sind.

15. Vorrichtung nach Anspruch 14, **dadurch gekennzeichnet,** daß die Vakuumprozeßkammer (1) als Durchlaufanlage mit mindestens einem Schleusenventil (21) ausgebildet ist.

16. Vorrichtung nach Anspruch 14, **dadurch gekennzeichnet,** daß der Vakuumprozeßkammer (1) eine Abkühlkammer (22) nachgeschaltet ist.

17. Vorrichtung nach Anspruch 16, **dadurch gekennzeichnet,** daß zwischen der Vakuumprozeßkammer (1) und der Abkühlkammer (22) eine schleuse (21) angeordnet ist.

18. Vorrichtung nach Anspruch 14, **dadurch gekennzeichnet,** daß der Kondensatabscheider (3) als Metalldampf-Kondensator ausgebildet ist.

19. Vorrichtung nach Anspruch 14, **dadurch gekennzeichnet,** daß der Vakuum-Prozeßkammer (1) eine Mahlvorrichtung nachgeschaltet ist.

20. Vorrichtung nach Anspruch 14, **dadurch gekennzeichnet,** daß zwischen der Vakuumpumpe (6) und einer der Vakuumpumpe nachgeschalteten Ableitung (8) eine durch Ventile (10,11) regelbare Ringleitung (9) angeordnet ist, in der sich der Gasneutralisator (12) und/oder der Gastrockner (13) befindet bzw. befinden.

21. Vorrichtung nach Anspruch 14, **dadurch gekennzeichnet,** daß der Vakuumpumpe (6) ein Gasneutralisator (12) nachgeschaltet ist.

22. Vorrichtung nach Anspruch 14, **dadurch gekennzeichnet,** daß der Vakuumpumpe (6) ein Brenner für die Verbrennung der Abgase nachgeschaltet ist.

23. Vorrichtung nach Anspruch 14, **dadurch gekennzeichnet,** daß der Vakuumpumpe (6) eine katalytische Vorrichtung, vorzugsweise mit einem Niederdruck-Katalysator, nachgeschaltet ist.

## Claims

1. Process for recycling products made of organic materials in the form of rubber, plastics materials and/or varnishes or provided with organic materials in the form of rubber, plastics materials and varnishes at high temperatures, the products being heated at subatmospheric pressure in a non-reactive atmosphere to a temperature of at least 200°C, the gases and vapours which are thereby produced being condensed and the condensate being collected and supplied to a recycling or disposal process,
characterised in that, in cases where the products contain metallic components, the residues formed from the organic substances are separated from the metallic components, collected, comminuted and supplied to a recycling or disposal process.

2. Process according to claim 1, characterised in that, in the presence of volatisable metallic components, the latter are volatised, condensed and supplied to a recycling or disposal process.

3. Process according to claim 1, characterised in that the greased and/or oiled products are degreased and/or de-oiled in a preliminary cleaning step by heating at subatmospheric pressure and the fats and/or oils are collected and supplied to a recycling or disposal process.

4. Process according to claim 3, characterised in that the preliminary cleaning is carried out at a lower temperature than the treatment.

5. Process according to claim 2, characterised in that, in order to delay the volatisation of the volatisable metallic components, the pressure is initially adjusted to below atmospheric pressure but above the subsequent treatment pressure during heating of the products, and the condensation heat of the initially volatised components is used for heating colder zones within the same charge.

6. Process according to claim 1, characterised in that, in the treatment of products with metallic components, the metallic components freed of the residues are supplied to a recycling process.

7. Process according to claim 1, characterised in that, in the treatment of electrical cables with a coating of plastics material and/or rubber, the cables are subjected to a temperature of at least 200°C, the residues formed from the coating are mechanically removed and the metallic components of the cables are supplied to a recycling process.

8. Process according to claims 1 and 6, characterised in that metallic solid components connected by rubber, more particularly vibration mounts, are accordingly treated and the solid components are supplied to a recycling process.

9. Process according to claim 1, characterised in that plastics material containers with dye pigments are subjected to a temperature of at least 200°C, preferably at least 250°C, the plastics material components are volatised and condensed and the dye pigments are collected.

10. Process according to claim 1, characterised in that motor vehicle steering wheels with a metal core and a cover of organic material are subjected to a temperature of at least 250°C, the residues formed from the organic material are separated from the metal core and the metal core is supplied to a recycling process.

11. Process according to claim 1, characterised in that paint-coated workpiece supports from a painting line are subjected to a temperature of at least 200°C and the residues formed from the paint are removed from the workpiece support.

12. Process according to claim 1, characterised in that reject painted metal parts are subjected to a temperature of at least 200°C and the residues formed from the paint are removed from the metal parts and the metal parts are supplied to a recycling process.

13. Process according to claims 1 and 2, characterised in that car tyres with wire inlays, which comprise a coating of cadmium and/or zinc, are firstly embrittled and then the batch temperature is increased to values at which the cadmium and/or zinc evaporates at a given vacuum, the embrittled rubber residues are removed and collected and the vapours of cadmium and/or zinc are condensed and supplied to a recycling process.

14. Device for carrying out the process according to one or more of the preceding claims, characterised by a heatable vacuum processing chamber (1), which by means of conduits (2, 5) of a conduit system (2, 5, 9, 14) with valves (4, 7) is connected upstream of at least one condensate separator (3), a vacuum pump (6) and a gas drier (13).

15. Device according to claim 14, characterised in that the vacuum processing chamber (1) is constructed as a continuous flow device with at least one sluice valve (21).

16. Device according to claim 14, characterised in that a cooling chamber (22) is connected downstream of the vacuum processing chamber (1).

17. Device according to claim 16, characterised in that a sluice (21) is arranged between the vacuum processing chamber (1) and the cooling chamber (22).

18. Device according to claim 14, characterised in that the condensate separator (3) is constructed as a metal vapour condenser.

19. Device according to claim 14, characterised in that a grinding device is connected downstream of the vacuum processing chamber (1).

20. Device according to claim 14, characterised in that a ring conduit (9), which is controllable by valves (10, 11), is arranged between the vacuum pump (6) and an outflow (8) connected downstream of the vacuum pump, the gas neutraliser (12) and/or the gas drier (13) being disposed in the ring conduit (9).

21. Device according to claim 14, characterised in that the a gas neutraliser (12) is connected downstream of the vacuum pump (6).

22. Device according to claim 14, characterised in that a burner for the combustion of the exhaust gases is connected downstream of the vacuum pump (6).

23. Device according to claim 14, characterised in that a catalytic device, preferably with a low pressure catalyser, is connected downstream of the vacuum pump (6).

## Revendications

1. Procédé pour le traitement d'un matériau constitué de matières organiques dans la forme de caoutchoucs, de matières plastiques et/ou de laques ou muni de matières organiques dans la forme de caoutchoucs, de matières plastiques et de laques à une température élevée, le matériau étant chauffé à une pression inférieure à la pression atmosphérique dans une atmosphère non réactive à une température d'au moins 200°C, les gaz et les vapeurs ainsi formés étant condensés et le condensat étant piégé et recyclé ou mis aux déchets, caractérisé en ce que pour des constituants métalliques contenus dans le matériau, les résidus formés à partir des matières organiques sont séparés des constituants métalliques, sont recueillis, broyés et recyclés ou mis aux déchets.

2. Procédé selon la revendication 1, caractérisé en ce qu'en présence de constituants métalliques pouvant être évaporés ceux-ci sont évaporés, condensés et recyclés ou mis aux déchets.

3. Procédé selon la revendication 1, caractérisé en ce que l'on dégraisse et/ou on déshuile un matériau graissé et/ou huilé dans une étape de prénettoyage par chauffage à une pression inférieure à la pression atmosphérique et on piège les graisses et/ou les huiles et on les recycle ou on les met aux déchets.

4. Procédé selon la revendication 3, caractérisé en ce que l'on réalise le prénettoyage à une température inférieure à celle du traitement.

5. Procédé selon la revendication 2, caractérisé en ce que l'on ajuste au départ la pression à une valeur inférieure à la pression atmosphérique pour retarder l'évaporation des constituants métalliques pouvant être évaporés lors du chauffage du matériau, toutefois supérieure à la pression ultérieure du traitement et on utilise la chaleur de condensation des constituants évaporés dans un premier temps pour chauffer des zones plus froides à l'intérieur de la même charge.

6. Procédé selon la revendication 1, caractérisé en ce que l'on recycle les constituants métalliques libérés des résidus lors du traitement d'un matériau avec des constituants métalliques.

7. Procédé selon la revendication 1, caractérisé en ce que pour le traitement de conduites électriques avec une gaine constituée de matière plastique et/ou de caoutchouc, on expose les conduites à une température d'au moins 200°C, on élimine mécaniquement les résidus formés à partir de la gaine et on réalise un procédé de recyclage des constituants métalliques des conduites.

8. Procédé selon les revendications 1 et 6, caractérisé en ce que l'on traite de manière correspondante des pièces massives métalliques liées par du caoutchouc, en particulier des liaisons caoutchouc-métal, et on recycle les pièces massives.

9. Procédé selon la revendication 1, caractérisé en ce que l'on expose des récipients en matière plastique avec des pigments de couleur à une température d'au moins 200°C, de préférence d'au moins 250°C, on évapore et on condense les constituants de matière plastique et on recueille les pigments de couleur.

10. Procédé selon la revendication 1, caractérisé en ce que l'on expose des volants de véhicules automobiles avec un noyau métallique et un revêtement constitué de matériau organique à une température d'au moins 250°C, on élimine les résidus formés à partir du matériau organique du noyau métallique et on recycle le noyau métallique.

11. Procédé selon la revendication 1, caractérisé en ce que l'on expose des supports de pièces à usiner revêtus de laque provenant d'une voie de laquage à une température d'au moins 200°C et on élimine les résidus formés de la laque du support de la pièce à usiner.

12. Procédé selon la revendication 1, caractérisé en ce que l'on expose des pièces métalliques laquées de manière défectueuse à une température d'au moins 200°C et on élimine les résidus formés de la laque des pièces métalliques et on recycle les pièces métalliques.

13. Procédé selon les revendications 1 et 2, caractérisé en ce que l'on fragilise dans un premier temps des pneus de véhicules automobiles avec des cordes d'acier qui présentent un revêtement constitué de cadmium et/ou de zinc, on élève après cela la température de la charge à des valeurs pour lesquelles le cadmium et/ou le zinc est évaporé sous un vide prédéterminé, on élimine et on piège les résidus de caoutchouc fragilisés et on condense les vapeurs de cadmium et/ou de zinc et on les recycle.

14. Dispositif pour la réalisation du procédé selon l'une ou plusieurs quelconques des revendications précédentes, caractérisé par une chambre de procédé sous vide pouvant être chauffée (1), après laquelle sont raccordés au moins un séparateur de condensat (3), une pompe à vide (6) et un sécheur de gaz (13) par l'intermédiaire de canalisations (2, 5) d'un système de canalisation (2, 5, 9, 14) avec des vannes (4, 7).

15. Dispositif selon la revendication 14, caractérisé en ce que la chambre du procédé sous vide (1) est configurée comme une installation de passage avec au moins une vanne de sas (21).

16. Dispositif selon la revendication 14, caractérisé en ce qu'une chambre de refroidissement (22) est raccordée après la chambre du procédé sous vide (1).

17. Dispositif selon la revendication 16, caractérisé en ce que qu'il est disposé entre la chambre du procédé sous vide (1) et la chambre de refroidissement (22) un sas (21).

18. Dispositif selon la revendication 14, caractérisé en ce que le séparateur de condensat (3) est conçu comme un condenseur de vapeurs métalliques.

19. Dispositif selon la revendication 14, caractérisé en ce qu'un dispositif de broyage est raccordé après la chambre du procédé sous vide (1).

20. Dispositif selon la revendication 14, caractérisé en ce qu'il est disposé entre la pompe à vide (6) et une canalisation (8) raccordée après la pompe à vide une canalisation en boucle (9) pouvant être régulée par des vannes (10, 11), dans laquelle se trouvent respectivement le dispositif de neutralisation de gaz (12) et/ou le sécheur de gaz (13).

21. Dispositif selon la revendication 14, caractérisé en ce qu'un dispositif de neutralisation de gaz (12) est raccordé après la pompe à vide (6).

22. Dispositif selon la revendication 14, caractérisé en ce qu'un brûleur est raccordé après la pompe à vide (6) pour l'incinération des effluents gazeux.

23. Dispositif selon la revendication 14, caractérisé en ce qu'un dispositif catalytique, de préférence avec un catalyseur à basse pression, est raccordé après la pompe à vide (6).
